# EUROPÄISCHE PATENTSCHRIFT

(11) **EP 1 397 277 B1**
(45) Veröffentlichungstag und Bekanntmachung des Hinweises auf die Patenterteilung: **21.12.2005**
(21) Anmeldenummer: 02780756.9
(22) Anmeldetag: 01.06.2002
(51) Int. Cl.: B60R 25/02

(54) **ELEKTRISCHE LENKUNGSVERRIEGELUNG**
ELECTRIC STEERING LOCK
SYSTEME DE BLOCAGE DE DIRECTION ELECTRIQUE

(30) Priorität: 16.06.2001 DE 10129095
(43) Veröffentlichungstag der Anmeldung: 17.03.2004
(73) Patentinhaber: Huf Hülsbeck & Fürst GmbH & Co. KG, 42551 Velbert (DE); Siemens AG, 80333 München (DE)
(72) Erfinder: NEUHOFF, Stefan, 45239 Essen (DE); BUCHNER, Reiner, 93161 Sinzing (DE)
(74) Vertreter: Mentzel, Norbert
(86) Internationale Anmeldenummer: PCT/EP2002/006020
(87) Internationale Veröffentlichungsnummer: WO 2002/102631

(56) Entgegenhaltungen:
- WO-A-01/00462
- DE-C- 19 809 295

## Beschreibung

Die Erfindung richtet sich auf eine Lenkungsverriegelung der im Oberbegriff des Patentanspruchs angegebenen Art. Es gibt eine Vorrichtung zur Positionserkennung, mit welcher die Lage des Sperrbolzens in seinen beiden Endpositionen überwacht werden soll, nämlich in dessen Verriegelungsposition einerseits, wo die Lenkspindel des Fahrzeugs gegenüber Drehungen blockiert ist, und einer Entriegelungsposition andererseits, wo eine Drehung der Lenkspindel ohne weiteres möglich ist. Diese Vorrichtung umfasst zwei Hallsensoren und einen mit dem Sperrbolzen mitbeweglichen Permanentmagneten. Bei dem weltweiten Einsatz von Fahrzeugen muss die Lenkungsverriegelung unter allen im Anwendungsfall auftretenden Umgebungstemperaturen einwandfrei funktionieren, was bei der bekannten Lenkungsverriegelung mit hohem Aufwand verbunden ist.

Bei der bekannten Vorrichtung dieser Art (DE 199 29 435 A1) verwendet man einerseits einen digital wirksamen und andererseits einen analog wirksamen Hallsensor. Dabei wirkt der analog wirksame Hallsensor über eine so große Distanz, dass in der einen Endposition des Sperrbolzens beide Hallsensoren ansprechen. Durch den großen Ansprechbereich des analog wirksamen Hallsensors soll auch der zeitliche Verlauf der anfallenden Signale vom zugehörigen Auswerter überwacht werden. Störfälle, wo beide Hallsensoren ansprechen, sind bei dieser bekannten Vorrichtung nicht zu ermitteln. Ein wesentlicher Nachteil der bekannten Vorrichtung besteht aber darin, dass sich die Ansprechbereiche der Hallsensoren einerseits und der magnetische Fluss des Permanentmagneten andererseits sich bei wachsender Temperatur erniedrigen, weshalb dann die bekannte Lenkungsverriegelung keine eindeutige Positionserkennung des Sperrbolzens liefert.

Es gibt eine andere elektrische Lenkungsverriegelung, bei welcher übereinstimmende digital wirksame Hallsensoren im Zwischenraum zwischen den beiden Endpositionen des Permanentmagneten angeordnet sind. Die beiden übereinstimmenden Sensoren sind S-aktiv, d.h. sie sprechen beim Überfahren vom Polübergang des Permanentmagneten nur auf dessen Südpol an. In der einen Endposition des Sperrbolzens spricht zwar der eine Sensor an, aber in der anderen Endposition keiner von beiden. Der zweite Sensor spricht auf den flach verlaufenden Kurvenabschnitt an, wo sich die Flussdichte in Abhängigkeit von der Umgebungstemperatur stark verändert. Deshalb wird das Abschalten des Hallsensors als Schaltsignal vom Auswerter genutzt. In der Endstellung steht deshalb kein Signal dieses Sensors mehr zur Verfügung.

Der Erfindung liegt die Aufgabe zugrunde, eine zuverlässige, einfache Lenkungsverriegelung der im Oberbegriff des Patentanspruches angegebenen Art zu entwickeln, die auch bei allen, im Anwendungsfall sich ergebenden Temperaturen einwandfrei arbeitet und eine eindeutige Positionserkennung gewährleistet. Dies wird erfindungsgemäß durch die im Patentanspruch angegebenen Maßnahmen erreicht, denen folgende besondere Bedeutung zukommt.

Durch Verwendung der zueinander unterschiedlichen, N-aktiven und S-aktiven Sensoren und ihre Positionierung im Zwischenraum, wo sie jeweils dem gleichnamigen Pol des Permanentmagneten zugekehrt sind, erfolgt das Abschalten des elektrischen Antriebs vom Bolzenhub stets in einem steilen Kurventeilstück der wegabhängigen magnetischen Flussdichte, wenn die Flussdichte dem gegebenen Schwellenwert des Hallsensors übersteigt. Aus physikalischen Gründen ergibt sich bei diesem steilen Kurvenstück eine sehr geringe Temperaturabhängigkeit des Umschaltpunktes. Dadurch kann es nicht zu Fehlsteuerungen des Bolzens in den Endpositionen kommen; es liegt, bei jeder Temperatur, die gewünschte definierte Verriegelungs- bzw. Entriegelungsposition des Sperrbolzens vor.

Durch den im Anspruch genannten Endabstand des polabhängig ansprechenden Sensors gegenüber dem gleichnamigen Pol, wird bei der Erfindung ferner dafür gesorgt, dass in beiden Endlagen entweder der N-aktive oder der S-aktive Hallsensor ein eindeutiges Signal dem Auswerter liefern. Wegen der im Anspruch genannten Bemessung dieses Endabstands ist das bei jeder im Anwendungsfall des Fahrzeugs auftretenden Temperatur gewährleistet. Für die statische Positionserkennung nutzt man den flachen, an sich temperaturabhängigen Verlauf der magnetischen Flussdichte und braucht nicht zu aufwendigen Sensoren oder analogen Steuermitteln greifen. Wenn bei der Erfindung beide Hallsensoren eingeschaltet sind, dann liegt eindeutig ein Betriebsfehler vor, was vom Auswerter erkannt wird und zu entsprechenden Schutzreaktionen führt. Der Auswerter erkennt auch die Umsteuerungsphase des Sperrbolzens, denn im Abstandsbereich zwischen den beiden Hallsensoren spricht keiner der beiden auf den Permanentmagneten an. Der Auswerter spricht erst dann an, wenn in der Endphase dieser Umsteuerungsbewegung der jeweils zum gleichnamigen Pol gehörende Hallsensor von der temperaturunabhängigen steilen Kurve des magnetischen Kraftflusses beaufschlagt wird und dabei der gegebene temperaturabhängige Schwellenwert überschritten wird. Die Erfindung kann die jeweiligen Positionen des Sperrbolzens eindeutig erkennen, auswerten und anzeigen, auch wenn der Hubweg nur wenige Millimeter groß ist. Die Erfindung zeichnet sich durch eine große Zuverlässigkeit aus.

In den Zeichnungen ist die Erfindung schematisch in einem Ausführungsbeispiel dargestellt. Es zeigen:
- Fig. 1 + 2: die wesentlichsten Bauteile der erfindungsgemäßen Lenkungsvorrichtung und zwar in Fig. 1 in der Verriegelungsposition und in Fig. 2 in der Entriegelungsposition,
- Fig. 3: wird, in starker Vergrößerung, anhand des temperaturabhängigen Verlaufs der magnetischen Flussdichte vom Permanentmagneten die Wirkungsweise der erfindungsgemäßen Lenkungsverriegelung in der Verriegelungsposition des Sperrbolzens erläutert und in
- Fig. 4,: in analoger Weise, in der Entriegelungsposition des Sperrbolzens.

Die Lenkungsverriegelung umfasst einen Sperrbolzen 10, der von Hubmitteln 11 bis 13 zwischen den beiden, mit der Hilfslinie 10.1 und 10.2 gekennzeichneten Endpositionen im Sinne des Pfeils 14 längsbewegt wird. In der einen Endposition 10,1 greift der Sperrbolzen 10 in eine drehfest mit einer Lenkspindel verbundene Aussparung 16 ein. Dadurch ist die Lenkspindel 15 verriegelt. Die eine Endposition 10.1 erweist sich somit als "Verriegelungsposition" des Sperrbolzens 10.

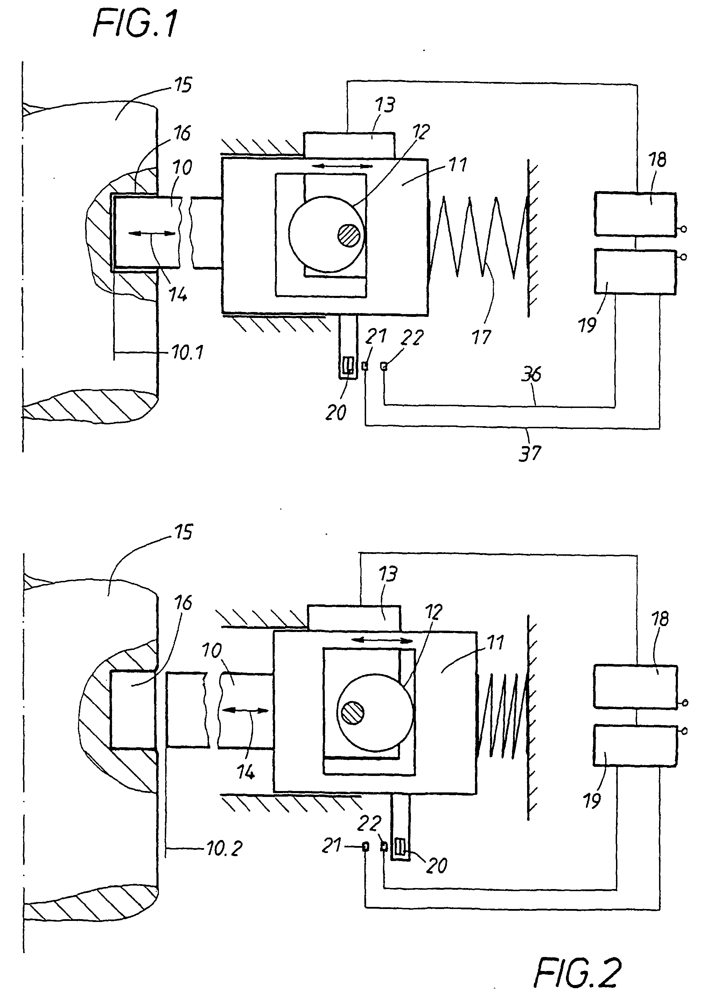

Die Hubbewegung 14 des Sperrbolzens 10 geht von einem Schlitten 11 aus, der von einem Motor 13 über einen Exzenter 12 unter Mitwirkung eine Rückstellfeder 17 bewegt wird. Für das Ein- und Ausschalten des Motors 13 gibt es eine elektrische Steuerung 18, die nicht nur von einem Auswerter 19 beeinflusst wird, sondern auch von einem nicht näher gezeigten Betätiger, der z.B. aus einem durch einen Schlüssel bedienbaren Schließzylinder besteht. Wird der Betätiger wirksam gesetzt, dann wird der Motor 13 von der Steuerung 18 eingeschaltet. Der Exzenter 12 bewegt dadurch den Schlitten 11 gegen die Wirkung der Rückstellfeder 17 in die andere Endposition 10.2 von Fig. 2, wobei es zu einer besonderen Wegerfassung kommt.

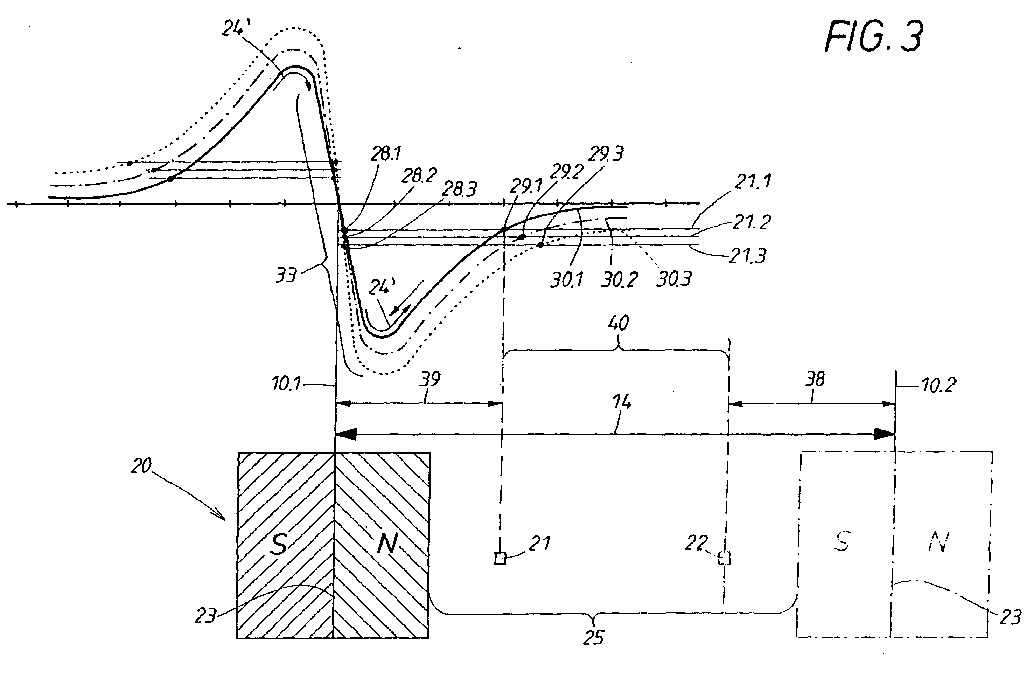

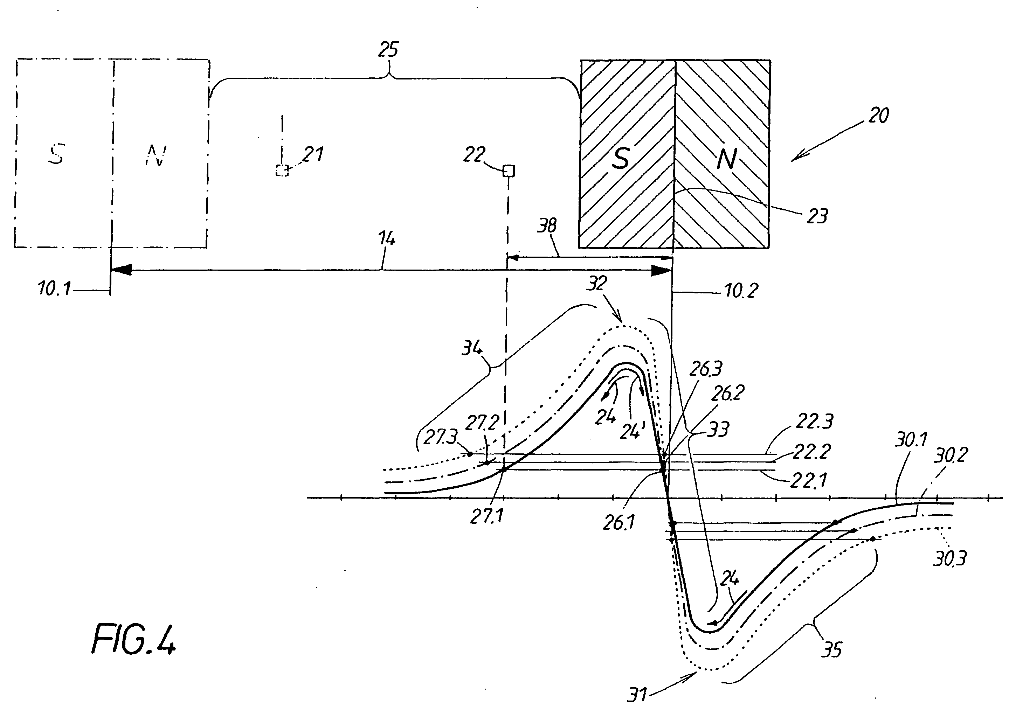

Die Wegerfassung der Lenkungsverriegelung geschieht durch einen mit dem Schlitten 11 mitbeweglichen Permanentmagneten 20 und zwei zueinander unterschiedlichen Hallsensoren 21, 22. Die sich dabei ergebenden Verhältnisse sind in den Fig. 3 und 4 in starker Vergrößerung veranschaulicht. Die beiden Pole des Magneten 20 sind mit S und N bezeichnet. Der Permanentmagnet 20 ist so am Schlitten 11 angebracht, dass der mit 23 gekennzeichnete Polübergang bei der auch dort mit 14 gekennzeichneten Hubbewegung die beiden sensitiven Flächen 21, 22 der Hallsensoren überstreicht. Wie bereits erwähnt wurde, zeigen die Fig. 3 und 4 die beiden Endpositionen 10.1 bzw. 10.2 von Fig. 1 bzw. 2. In diesen Fig. sind in den beiden Endstellungen 10.1 und 10.2 in Ausrichtung mit den Polübergängen 23, Kurven 30.1 bis 30.3 eingezeichnet, die in Abhängigkeit vom Weg die magnetische Flussdichte bei verschiedenen Temperaturen wiedergeben. Definitionsgemäß hat dann der Südpol die positive Richtung der Flussdichte und der Nordpol die entsprechende negative Richtung. Weil die magnetische Flussdichte temperaturabhängig ist, sind in den Fig. 3 und 4 drei Kurven für drei verschiedene Temperaturen eingetragen. Die mit 30.1 gekennzeichnete Kurve gilt für die im Anwendungsfall auftretende höchste Temperatur, nämlich von z.B. + 80°C. Die Kurve 30.2 dagegen gilt für eine mittlere Temperatur von ca. + 20°C und die Kurve 30.3 für - 40°C.

Bemerkenswert ist, dass die Kurven 30.1 bis 30.3 beidseits ihrer Maxima 32 und Minima 31 sehr unterschiedliche Flanken 33 bis 35 aufweisen. Die Kurvenflanken 33 im Bereich des Polübergangs 23 sind verhältnismäßig steil. Hier fallen die drei Kurvenäste 30.1 bis 30.3 nahezu zusammen. Die beiden äußeren Zweige haben sehr flach ablaufende Flanken 34, 35, wo die Werte für die Flussdichte von der Temperatur stark abhängen.

Die beiden Hallsensoren 21, 22 sind zueinander unterschiedlich ausgebildet. Der eine 21 ist nordpolaktiv und der andere 22 südpolaktiv. Beide Hallsensoren 21, 22 befinden sich in dem Zwischenraum 25 zwischen den beiden Endpositionen 10.1 und 10.2 des Permanentmagneten 20. Dabei ist der S-aktive Sensor 22 in der Endposition 10.2 dem Südpol und der N-aktive Sensor 21 dem Nordpol zugekehrt, wenn der Permanentmagnet 20 sich in seiner Endposition 10.1 befindet. Die Sensoren 21, 22 sprechen erst bei einem bestimmten Schwellenwert der magnetischen Flussdichte an. Auch diese Schwellenwerte sind temperaturabhängig und in den Diagrammen mit 22.1 bis 22.3 bzw. 21.1 bis 21.3 gekennzeichnet. Diese Linien 21.1 bis 22.3 entsprechen der Empfindlichkeit der beiden Sensoren 21 bzw. 22 bei den drei genannten Temperaturen + 80°C, + 20°C und - 40°C. Die ungünstigsten Verhältnisse liegen bei der höchsten Temperatur, nämlich bei 80°C vor.

Es soll von der Verriegelungsposition 10.1 von Fig. 1 ausgegangen werden. Die Hubbewegung 14 wird durch die Hubmittel 11 bis 13 eingeleitet. Wenn sich der Permanentmagnet der in Fig. 2 bzw. 4 ersichtlichen anderen Endposition 10.2 nähert, so spricht der Sensor 22 nicht an, solange die Flanke 35 mit negativen Werten der Flussdichte der angenommenen Kurve 30.1 über den Sensor 22 streicht. Der Sensor 22 ist in diesem Fall erst beim Schwellenwert 22.1 wirksam, wenn die Flussdichte ausreichend große positiven Werte erreicht. Die S-sensitive Fläche des Sensors 22 durchläuft auf dem mit dem Pfeil 24 gekennzeichneten Sinn die Kurve 30.1. Der Sensor spricht wegen des jetzt gültigen Schwellenwerts 22.1 an der Stelle 26.1 der steilen Kurvenflanke 33 an und meldet dies über die Leitung 36 dem Auswerter 19. Der Auswerter 19 veranlasst die Steuerung 18 den Motor mit einem definierten Nachlauf auszuschalten, nämlich so, dass der Permanentmagnet 20 in einem definierten Endabstand 38 stehen bleibt. Dieser Abstand 38 ist so bemessen, dass er sich noch vor dem Ausschaltpunkt 27.1 des Sensors 22 auf der ungünstigsten Kurve 30.1 im Diagramm von Fig. 4 befindet. In der Endposition 10.2 befindet sich folglich die sensitive Fläche 22 des S-aktiven Sensors noch in einem zu seiner Aktivierung ausreichend großen Magnetfeld bei 27.1 der Kurve 30.1. In dieser Position 10.2 ist also der Sensor 22 immer noch aktiv und meldet dies dem Auswerter 19. In dieser Position 10.2 liegen die aus Fig. 2 ersichtlichen Verhältnisse vor, wo sich der Sperrbolzen 10 außerhalb der Lenkspindel-Aussparung 16 befindet. Die Lenkspindel 15 ist zur Drehung frei. Die Endposition 10.2 erweist sich somit als "Entriegelungsposition" der Vorrichtung.

Bei der Erfindung bleibt der Hallsensor 22 auch dann aktiv, wenn gegenüber dem angenommenen Fall von + 80°C niedrigere Temperaturen vorliegen sollten. Dies wird in den Fig. 3 bzw. 4 durch die Kurven 30.2 und 30.3 veranschaulicht. Bedeutsam ist, dass die analogen Einschaltpunkte 26.2 und 26.3 in der steilen Flanke 33 praktisch an der gleichen Stelle liegen, weshalb sich, unabhängig welche Temperatur vorliegt, die Umschaltung an den Stellen 26.2 und 26.3 praktisch am gleichen Ort wie bei 26.1 ereignet. Die entsprechenden Ausschaltpunkte 27.2 und 27.3 auf den alternativen Kurven 30.2 und 30.3 für die temperaturmäßig zugehörigen Schwellenwerte 22.2 und 22.3 liegen zwar in einem weiten Bereich verstreut auf der äußeren flachen Flanke 34 dieser Kurven, doch ist dies aus folgendem Grund bedeutungslos. Weil der Endabstand 38 nach der die höchste Temperatur repräsentierenden Kurve 30.1 gewählt wurde, bleibt in der Position 10.2 von Fig. 4 auch bei den Kurven 30.2 und 30.3 niedriger Temperatur der Sensor 22 aktiv. Mittels des Auswerters 19 wird beim Endabstand 38 im ganzen Temperaturbereich von 30.1 bis 30.3 wegen der dauerhaften Einschaltung des Sensors 22 eindeutig die Entriegelungsposition 10.2 des Sperrbolzens 10 festgestellt.

Wenn die Entriegelungsposition 10.2 verlassen werden soll, muss die zugangsberechtigte Person wieder die für das gewählte System erforderliche Betätigung ausführen, z.B. einen mechanischen oder elektrischen Schlüssel nach Rückdrehung des zugehörigen Sensors bzw. Schließzylinders herausziehen. Dann werden wieder von der Steuerung 18 die Hubmittel 11 bis 13 wirksam gesetzt, die den Rückhub der Hubbewegung 14 veranlassen. Die angenommene Kurve 30.1 wird im Sinne des Pfeils 24' von Fig. 4 und insbesondere Fig. 3 durchlaufen. Der S-aktive Sensor wird wegen der Remanenz etwas unterhalb des Schaltpunktes 26.1 ausgeschaltet und bleibt auch dann ausgeschaltet, wenn die Verriegelungsposition 10.1 von Fig. 1 und 3 erreicht ist. Ausweislich der Kurve 30.1 von Fig. 1 spricht der N-aktive Sensor 21 erst im Schaltpunkt 28.1 dieser Rückhubbewegung an, wo die Kurve 30.1 den temperaturmäßig zugehörigen Schwellenwert 21.1 dieses Sensors 21 schneidet. Das Einschaltsignal des Hallsensors 21 wird über die andere Leitung 37 dem Auswerter 19 gemeldet, welcher dann über die Steuerung 18 den Motor 13 wieder stoppt. Im Stillstand der Hubbewegung 14 befindet sich der N-aktive Sensor 21 in einem in Fig. 3 mit 39 gekennzeichneten Endabstand, wo der in Fig. 3 mit 29.1 bezeichnete Ausschaltpunkt auf der Kurve 30.1 bezüglich des Schwellenwerts 21.1 noch nicht überschritten ist. Im Abstand 39 ist also der Hallsensor 21 aktiv, was der Auswerter 19 erkennt.

Diese Verhältnisse ändern sich nicht, wenn die erfindungsgemäße Lenkungsverriegelung bei tieferen Temperaturen benutzt wird, wie sie z.B. durch die in Fig. 3 ebenfalls eingezeichneten weiteren Kurven 30.2 und 30.2 veranschaulicht ist, welche, wie bereits erwähnt wurde, der Temperatur von etwa + 20°C einerseits und - 40°C andererseits entsprechen. Zunächst liegen die bei der Gegenbewegung 24' liegenden Umschaltpunkte 28.2 und 28.3 wegen ihrer Lage an der steilen Flanke 33 praktisch wieder an der gleichen Stelle und bewirken eine praktisch temperaturunabhängige Abschaltung des Motors 13. Die analogen Ausschaltpunkte 29.2 und 29.3 liegen außerhalb des gewählten Endabstands 39. Auch bei niedrigeren Temperaturen 30.2 und 30.3 bleibt der Sensor 21 im Endabstand 39 eingeschaltet. Der Auswerter 19 erkennt die Verriegelungsposition 10.1 eindeutig im gesamten Temperaturbereich.

Der Auswerter 19 erfasst auch den Wegabschnitt 40 zwischen den beiden endseitigen Abschnitten 38, 39 des Hubwegs 14. In diesem Übergangsbereich 40 ist keiner der beiden Sensoren 21, 22 aktiv. Dies wird dem Auswerter 19 gemeldet, der entsprechend die Steuerung 18 beaufschlagt. Die vorausgehend eingeleitete Drehung des Motors 15 bleibt weiter wirksam, bis, wie beschrieben wurde, einer der beiden Sensoren 21, 22 an den praktisch am gleichen Ort liegenden Stellen 26.1 bis 26.3 bzw. 28.1 bis 28.3 temperaturunabhängig eingeschaltet wird.

Die Erfindung ermöglicht die Erfassung sehr kurzer Hubwege mit geringen Toleranzen und kommt mit nur einem einzigen Permanentmagneten 20 aus. Dass beide Hallsensoren 21, 22 aktiv werden, ist bei ordnungsgemäßer Wirksamkeit der erfindungsgemäßen Lenkungsverriegelung nicht möglich. Falls dies doch einmal auftritt, wird dies vom Auswerter 19 als Fehler erkannt und führt zu entsprechenden Meldungen und Aktivitäten im System. Jede der beiden Endpositionen 10.1 und 10.2 wird durch einen der beiden aktiv gesetzten Hallsensor 21 bzw. 22 bestätigt. Beim Start des Systems ist die Position des Magneten durch diese unterschiedliche Wirksamkeit und Unwirksamkeit der Sensoren 21, 22 eindeutig bestimmt.

### Bezugszeichenliste :

- 10: Sperrbolzen
- 10.1: erste Endposition, Verriegelungsposition
- 10.2: zweite Endposition, Entriegelungsposition
- 11: Hubmittel, Schlitten für 10
- 12: Hubmittel, Exzenter für 11
- 13: Hubmittel, Motor für 12
- 14: Pfeil der Hubbewegung von 10, Hubweg
- 15: Lenkspindel
- 16: Aussparung in 15 für 10
- 17: Rückstellfeder für 10, 11
- 18: elektronische Steuerung
- 19: Auswerter für 21, 22
- 20: Permanentmagnet
- 21: N-aktiver Hallsensor
- 21.1: Schwellenwert von 21 für + 80°C
- 21.2: Schwellenwert für 21 bei + 20°C
- 21.3: Schwellenwert von 21 bei - 40°C
- 22: S-aktiver Hallsensor
- 22.1: Schwellenwert von 22 bei + 80°C
- 22.2: Schwellenwert von 22 bei + 20°C
- 22.3: Schwellenwert von 22 bei - 40°C
- 23: Polübergang von 20
- 24: Bewegungsverlauf auf 30.1 von 10.1 auf 10.2
- 24': Gegenbewegungs-Verlauf von 10.2 auf 10.1
- 25: Zwischenraum zwischen 10.1 und 10.2 von 20
- 26.1: Einschaltpunkt von 22 bei 30.1
- 26.2: Einschaltpunkt von 22 bei 30.2
- 26.3: Einschaltpunkt von 22 bei 30.3
- 27.1: Ausschaltpunkt von 22 bei 30.1
- 27.2: Ausschaltpunkt von 22 bei 30.2
- 27.3: Ausschaltpunkt von 22 bei 30.3
- 28.1: Einschaltpunkt von 21 bei 30.1
- 28.2: Einschaltpunkt von 21 bei 30.2
- 28.3: Einschaltpunkt von 21 bei 30.3
- 29.1: Ausschaltpunkt von 21 bei 30.1
- 29.2: Ausschaltpunkt von 21 bei 30.2
- 29.3: Ausschaltpunkt von 21 bei 30.3
- 30.1: Kurve der magnetischen Flussdichte von 20 bei + 80°C
- 30.2: Kurve der magnetischen Flussdichte von 20 bei + 20°C
- 30.3: Kurve der magnetischen Flussdichte von 20 bei - 40°C
- 31: Minimum von 30.1 bis 30.3
- 32: Maximum von 30.1 bis 30.3
- 33: steile Flanke von 30.1 bis 30.3
- 34: flache Flanke von 30.1 bis 30.3 bei S-Flussdichte
- 35: flache Flanke von 30.1 bis 30.3 bei N-Flussdichte
- 36: Leitung zwischen 22 und 19
- 37: Leitung zwischen 21 und 19
- 38: Endabstand zwischen 22 und 23
- 39: Endabstand zwischen 21 und 23
- 40: Übergangsbereich für 23 zwischen 21 und 22 (Fig. 3, 4)

## Patentansprüche

1. Elektrische Lenkungsverriegelung für Fahrzeuge, mit einem Sperrbolzen (10),
der bezüglich einer Lenkspindel (15) zwischen zwei Endpositionen (10.1; 10.2) hubbeweglich (14) ist, nämlich einer Verriegelungsposition (10.1) und einer Entriegelungsposition (10.2),
mit einer Vorrichtung zur Positionserkennung des Sperrbolzens (10), umfassend
einerseits einen Permanentmagneten (20) und andererseits zwei zueinander unterschiedliche Hallsensoren (21, 22), die an einen Auswerter (19) angeschlossen sind,
wobei der Permanentmagnet (20) oder die Hallsensoren (21, 22) mit dem Sperrbolzen (10) mitbeweglich (14) sind und bei dieser Hubbewegung (14) der Polübergang (23) vom Permanentmagneten (20) die Hallsensoren (21, 22) überstreicht,
und wobei der eine Sensor (21) die Verriegelungsposition (10.1) und der andere (22) die Entriegelungsposition (10.2) überwachen,
**dadurch gekennzeichnet,**
**dass** zwar beide Sensoren (21, 22) digital wirksam sind, aber der eine Sensor (22) S-aktiv ist, also beim Überfahren vom Polübergang (23) des Permanentmagneten (20) nur auf dessen Südpol anspricht, während der andere Sensor (21) N-aktiv ist, also beim Überfahren vom Polübergang (23) des Permanentmagneten (20) nur auf dessen Nordpol anspricht,
**dass** die beiden Hallsensoren (21, 22) im Zwischenraum (25) zwischen den beiden Endpositionen (10.1; 10.2) des Polübergangs (23) vom Permanentmagneten (20) angeordnet sind und einen definierten Endabstand (38; 39) in den beiden Endpositionen (10.1; 10.2) aufweisen,
**dass** in der einen Endposition (10.1) der N-aktive Sensor (21) dem Nordpol des Permanentmagneten (20) und in der anderen Endposition (10.2) der S-aktive Sensor (22) dem Südpol des Permanentmagneten (20) zugekehrt sind,
und **dass** dieser Endabstand (38; 39) jener Entfernung entspricht, wo die magnetische Flussdichte (30.1) des Permanentmagneten (20) bei der im Anwendungsfall auftretenden höchsten Temperatur mindestens gleich ist dem zum Einschalten (26.1, 27.1; 28.1, 29.1) des N- bzw. S-aktiven Sensors (22; 21) erforderlichen Schwellwerts (22.1; 21.1).

## Claims

1. Electric steering lock for vehicles, having a locking pin (10)
which is liftable (14) relative to a steering spindle (15) between two end positions (10.1; 10.2), namely a locking position (10.1) and an unlocking position (10.2),
having means for detecting the position of the locking pin (10), comprising
on the one hand a permanent magnet (20) and on the other hand two Hall sensors (21, 22) different from each other which are connected to an evaluator (19),
the permanent magnet (20) or the Hall sensors (21, 22) being movable (14) with the locking pin (10) and during this lifting movement (14) the pole transition (23) of the permanent magnet (20) travels over the Hall sensors (21, 22),
one sensor (21) monitoring the locking position (10.1) and the other sensor (22) monitoring the unlocking position (10.2),
**characterised in that**
both sensors (21, 22) act digitally but one sensor (22) is S-active, i.e. on travelling over the pole transition (23) of the permanent magnet (20) it responds only to the south pole thereof, whereas the other sensor (21) is N-active, i.e. on travelling over the pole transition (23) of the permanent magnet (20) it responds only to the north pole thereof,
**in that** the two Hall sensors (21, 22) are arranged in the intermediate area (25) between the two end positions (10.1; 10.2) of the pole transition (23) of the permanent magnet (20) and have a defined final distance (38; 39) in the two end positions (10.1; 10.2),
**in that** in one end position (10.1) the N-active sensor (21) faces the north pole of the permanent magnet (20) and in the other end position (10.2) the S-active sensor (22) faces the south pole of the permanent magnet (20),
and **in that** this final distance (38; 39) corresponds to the distance at which the magnetic flux density (30.1) of the permanent magnet (20) at the maximum temperature occurring in practice is at least equal to the threshold value (22.1; 21.1) necessary in order to switch on (26.1, 27.1; 28.1, 29.1) the N- or S-active sensor (22; 21).

## Revendications

1. Dispositif de blocage de direction électrique pour des véhicules, avec un boulon de blocage (10),
ayant une mobilité de course (14) entre deux positions finales (10,1 ; 10.2) par rapport à une broche de direction (15), précisément une position de verrouillage (10.1) et une position de déverrouillage (10.2),
avec un dispositif pour l'identification de position du boulon de blocage (10), comprenant
d'une part un aimant permanent (20) et d'autre part deux capteurs à effet Hall (21, 22) différents l'un de l'autre, raccordés à un dispositif d'évaluation (19),
l'aimant permanent (20), ou les capteurs à effet Hall (21, 22) étant déplaçables, conjointement (14) avec le boulon de blocage (10) et, lors de ce déplacement de course (14), la transition de pôle (23) des éléments permanents (20) passe sur les capteurs à effet Hall (21, 22),
et où un premier capteur (21) surveille la position de verrouillage (10.1) et l'autre (22) surveille la position de déverrouillage (10.2),
**caractérisé en ce que**,
certes, les deux capteurs (21, 22) agissent numériquement, mais un premier capteur (22) est à activation S, donc, lors du passage de la transition des pôles (23) de l'aimant permanent (20), ne réagit qu'à son pôle sud, tandis que l'autre capteur (21) est à activité N, donc, lors du passage de la transition des pôles (23) de l'aimant permanent (20), ne réagit qu'à son pôle nord,
**en ce que** les deux capteurs à effet Hall (21, 22) sont disposés dans l'espace intermédiaire (25), entre les deux positions finales (10.1 ; 10.2) de la transition des pôles (23) de l'aimant permanent (20), et présentent un espacement final (38 ; 39) défini, aux deux positions finales (10.1 ; 10.2),
**en ce que**, à la première position finale (10.1), le capteur à activité N (21) est tourné vers le pôle nord de l'aimant permanent (20) et, à l'autre position finale (10.2), le capteur à activité S (22) est tourné vers le pôle sud de l'aimant permanent (20),
et **en ce que** cet espacement final (38 ; 39) correspond à l'espacement, auquel la densité de flux magnétique (30.1) de l'aimant permanent (20), pour la température maximale se produisant en cas d'application, est au moins égale à la valeur de seuil (22.1 ; 21.1), nécessaire pour obtenir la mise en service (26.1, 27.1 ; 28.1, 29.1) du capteur à activité N ou S (22 ; 21).
